# EUROPEAN PATENT APPLICATION

(11) **EP 2 083 543 A1**
(43) Date of publication of application: **29.07.2009**
(21) Application number: 07816542.0
(22) Date of filing: 11.10.2007
(51) Int. Cl.: H04L 29/06

(54) **A METHOD, SYSTEM AND NETWORK ENTITY FOR OBTAINING THE SESSION DESCRIPTION PROTOCOL CAPABILITY INFORMATION**

(30) Priority: 16.10.2006 CN 200610131990
(71) Applicant: Huawei Technologies Co., Ltd., Longgang District Shenzhen 518129 (CN)
(72) Inventor: LIN, Yangbo, Shenzhen, Guangdong 518129 (CN)
(74) Representative: Gulde Hengelhaupt Ziebig & Schneider
(86) International application number: PCT/CN2007/002928
(87) International publication number: WO 2008/046302

(57) **Abstract**

A method, system, network entity for obtaining Session Description Protocol capability information are disclosed. The method, system and network entity are used to solve the problem that a communication party is unable to acquire the Session Description Protocol capability information of the other party with the existing technology. The technical solutions according to the present invention allow a communication party to obtain the Session Description Protocol capability information of the other party from the other party by interacting messages between the two communication parties. Especially, in the case of H. 248 protocol, by extending the corresponding property parameters, a media gateway controller can obtain the Session Description Protocol capability information of the media gateway from the media gateway easily.

## Description

### FIELD OF THE INVENTION

The present invention relates to communication technologies, more particularly, to a method, a systems and a network entity for obtaining Session Description Protocol capability information.

### BACKGROUND

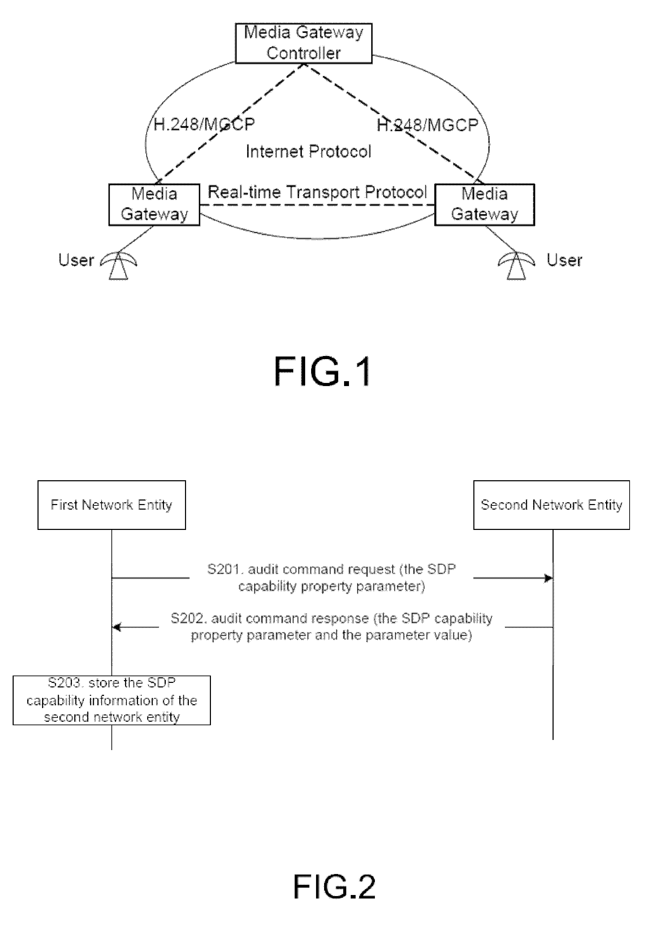

Media gateway controller (MGC) and media gateway (MG) are two key components in a packet network. The MGC is responsible for call control function while the MG is responsible for service bearing function, thereby achieving separation of a call control plane and a service bearing plane. In this way, network resources can be shared sufficiently, device upgrading and service expansion can be simplified, and the development and maintenance cost can be reduced dramatically. For example, FIG. 1 illustrates a networking schematic diagram of MG and MGC in the next generation network (NGN). The communication protocol between MGs is a Real-time Transport Protocol (RTP), and communication protocols between MG and MGC that are widely employed currently include the H.248/Gateway Control Protocol (MeGaCo) and the Media Gateway Control Protocol (MGCP). The MGCP version 1 was developed by the Internet Engineering Task Force (IETF) in October, 1999 and was amended in January, 2003. The H.248/MeGaCo version 1 was developed by the IETF and the International Telecommunications Union (ITU) together in November, 2000 and was amended in June, 2003. The H.248 version 2 was developed by the ITU in May, 2002 and was amended in March, 2004. The H.248 version 3 was developed by the ITU in September, 2005.

Taking H.248 as an example, various resources on the MG are abstracted as terminations. Terminations can be grouped into physical terminations and ephemeral terminations. The former represents some physical terminations having semi-permanent existence, such as a time division multiplex (TDM) channel, and the later represents some public resources that are applied for temporarily and will be released after use, such as a RTP stream. Further, the whole MG is represented by a root termination. A combination between terminations is abstracted as a context. The context may include a plurality of terminations. Therefore, a topology is used to describe the association among terminations. For a termination having not been associated with another termination yet, it is contained in a special context known as Null Context.

For such abstract model based on a protocol, a call connection is actually an operation upon the termination and the context. Such operation is implemented by request and response for a command between the MGC and MG. Types of the command include Add, Modify, Subtract, Move, Audit Value, Audit Capability, Notify, and Service Change. Command parameters, also named as descriptors, are classified into property, signal, event, statistic, etc. Parameters indicating service dependency are aggregated into a packet logically.

The H.248 uses local and remote descriptors to negotiate media parameters, wherein a local descriptor defines parameters of locally received media, and a remote descriptor defines parameters of a remotely received media, such as a receiving address, a receiving port, a media type, etc. By default, the H.248 uses the session description protocol (SDP) of the Request for Comments (RFC) 2327 developed by the IETF to describe these media parameters in the local and remote descriptors. However, the RFC3266 developed by the IETF additionally is an update of the RFC2327 for supporting IPv6, and the IETF amended the SDP in the recently developed RFC4566, causing change of the protocol syntax.

Since the RFC 3266 and RFC 2566 will also be applicable in the H. 248, the MG for implementing the different RFCs which are related to SDP may be provided with different SDP capabilities, including the SDP parameters which might be supported and the possible values for these parameters. The MGC can employ these capabilities effectively in controlling the MG only when the MGC learns the capabilities of these SDPs. Although the existing H. 248 protocol allows the MGC to audit the local and remote descriptor on the MG, it does not provide any mechanism for the MGC to acquire the SDP capability information related to the MG.

### SUMMARY

Methods, systems, network entities for obtaining Session Description Protocol (SDP) capability information are provided according to the present invention. The methods, systems and network entities are used to solve the problem that a communication party is unable to acquire the Session Description Protocol capability information of the other party with the existing technology.

A method for obtaining Session Description Protocol capability information is provided according to the present invention. The method includes:
requesting, by a first network entity, Session Description Protocol capability information of a second network entity from the second network entity; and
returning, by the second network entity, the Session Description Protocol capability information of itself to the first network entity, in response to the request.

In this method, the SDP capability information includes a supported SDP parameter and a value of the SDP parameter.

In addition, the first network entity communicates with the second network entity by way of H. 248 protocol.

With respect to the H. 248 protocol, the request sent from the first network entity to the second network entity may be an audit command request carrying property parameters respectively corresponding to each SDP capability to be requested by the first network entity.

According to audit command request, the second network entity carries the SDP capability information of itself, to be requested by the first network entity, in a command response to the command request and returns the command response to the first network entity.

With respect to the H. 248 protocol, the request sent from the first network entity to the second network entity may be an audit command request carrying a symbol representing the request for the property parameters corresponding to all the SDP capabilities.

In response to the command request, the second network entity carries all the SDP capability information of itself in a command response to the command request and returns the command response to the first network entity.

Specifically, the command response includes property parameters respectively corresponding to the SDP capability. The SDP capability information of the second network entity is set as values of the corresponding property parameters.

A system for obtaining the SDP capability information is further provided according to the present invention. The system includes a first network entity and a second network entity.

The first network entity includes a request module, configured to request the SDP capability information of the second network entity from the second network entity.

The second network entity includes a response module, configure to return the Session Description Protocol capability information of itself to the first network entity, in response to the request of the first network entity.

Moreover, the first network entity further includes: a storage module, configured to store the SDP capability information of the second network entity.

Moreover, the first network entity further includes a first transceiving module, configured to send the request.

The second network entity further includes a second transceiving module, configured to receive the request and send the information.

In addition, the first network entity is a media gateway controller and the second network entity is a media gateway. The media gateway controller and the media gateway communicate by way of the H. 248 protocol.

A network entity is further provided according to the present invention. The network entity includes a first transceiving module. The network entity further includes a module configured to request Session Description Protocol capability information of a communication peer from the communication peer via the first transceiving module.

Moreover, the network entity further includes a storage module configured to store the Session Description Protocol capability information of the peer.

A network entity is further provided according to the present invention. The network entity includes a second transceiving module. The network entity further includes a module configured to send the Session Description Protocol capability information of itself via the second transceiving module.

Advantageously, the methods, systems and network entities for obtaining the SDP capability information provided by the present invention allow a communication party to obtain the Session Description Protocol capability information of the other party from the other party by interacting messages between the two communication parties. Especially, in the case of the H. 248 protocol, by extending the corresponding property parameters, a media gateway controller can obtain the Session Description Protocol capability information of the media gateway from the media gateway easily.

### BRIEF DESCRIPTION OF THE DRAWINGS

Figure 1 is a diagram of a networking of MG and MGC according to NGN technologies in the prior art;

Figure 2 is a main flowchart of a first method for obtaining Session Description Protocol capability information according to an embodiment of the present invention; and

Figure 3 is a schematic diagram of a main structure of a system and network entities for obtaining Session Description Protocol capability information according to an embodiment of the present invention.

### DETAILED DESCRIPTION

An embodiment of the present invention provides a method for obtaining Session Description Protocol capability information, including:
requesting, by a first network entity, Session Description Protocol capability information of a second network entity from the second network entity;
returning, by the second network entity, the Session Description Protocol capability information of itself to the first network entity, in response to the request.

When the first network and the second network communicate by way of the H. 248 protocol, each SDP parameter defined by RFC 4566 can be defined as an extended property parameter of the H. 248 in the Registry type of the Internet Assigned Numbers Authority (IANA). These SDP parameter types include:
- Transmission Protocol (proto)
- Bandwidth Type (bwtype)
- Network Type (nettype)
- Address Type (addrtype)
- Encoding key (enckey)
- Attribute Field for Session Level (att-filed (session level))
- Attribute Field for Both Session and Media Levels (att-field (both session and media level))
- Attribute Field for Media Level Only (att-field (media level only))
- Attribute Field for Unknown Level (att-field (unknown level))

The foregoing property parameters represent the values associated with the corresponding registry types, respectively. The data type is a String list, and these parameters are configured in the termination status and are read-only parameters.

As illustrated in Figure 2, the main process for implementing the foregoing method of the present invention based on the H. 248 protocol includes the following steps.

In Step S201, a first network entity sends an audit command request to a second network entity. The audit command request carries property parameters respectively corresponding to each foregoing SDP capability to be requested by the first network.

With respect to the H. 248 protocol, the request sent from the first network entity to the second network entity may be an audit command request carrying property parameters respectively corresponding to each SDP capability to be requested by the first network entity.

According to the audit command request, the second network entity carries the SDP capability information of itself, to be requested by the first network entity, in a command response to the command request and returns the command response to the first network entity.

With respect to the H. 248 protocol, the request sent from the first network entity to the second network entity may also be an audit command request carrying a symbol representing the request for the property parameters corresponding to all the SDP capabilities, for instance, carrying a wildcard.

In response to the audit command request, the second network entity carries all the SDP capability information of itself in a command response to the command request and returns the command response to the first network entity.

In Step S202, according to the audit command request, the second network entity carries the SDP capability information of itself, to be requested by the first network entity, in a command response to the command request and returns the command response to the first network entity.

Specifically, the command response includes property parameters respectively corresponding to each SDP capability to be requested by the first network entity. The SDP capability information of the second network entity is set as the values of the corresponding property parameters. Alternatively, according to the wildcard, the command response includes property parameters and the values of these property parameters, corresponding to all SDP capabilities supported by the second network entity. The values of the property parameters which are not supported by the second network entity are set to Null.

In Step S203, the first network entity stores locally the received SDP capability information of the second network entity.

One scenario of the foregoing technical solution is that the first network entity is an MGC and the second network entity is an MG. Typically, to determine the SDP capability of the MG, including the SDP parameters which might be supported and the values of these parameters, the MGC has to send an audit command request, e.g., AuditValue command request, to the MG with respect to the foregoing property parameters. Then, the MG may return a corresponding command response carrying the value that is likely to be associated with each audited property parameter, to the MGC. The MGC may also use a wildcard to audit all these property parameters at the same time. If the MG does not support an SDP parameter corresponding to a certain audited property parameter, then a null list of values which are likely to be associated with the property parameters is retuned from the MG to the MGC. In this way, the MGC may obtain the SDP capability of the MG by auditing these property parameters.

For instance, the packet including these extended property parameters is named as an SDP capability packet. The property parameter corresponding to the transmission protocol (proto) registry type is named as a transmission protocol (proto). The property parameter corresponding to the address type (addrtype) registry type is named as an address type (addrtype). The MGC sends to the MG an AuditValue command request regarding the transmission protocol (proto) property parameter and the address type (addrtype) property parameter in the SDP capability packet. The MG puts the locally supported transmission protocol RTP and TCP as the possible value for the transmission protocol (proto) property parameter in a list and puts the locally supported address type IPv4 as the possible value for the address type (addrtype) property parameter in a list, and embraces these lists together in a corresponding command response to the MGC. In this way, the MGC may learn that the transmission type supported by the MG is RTP or TCP, and that the address type supported by the MG is IPv4.

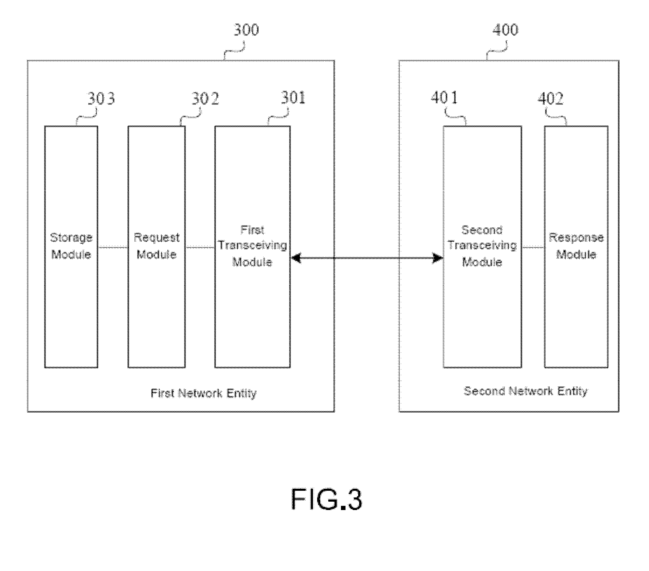

Referring to Figure 3, the present invention further provides a system for obtaining the SDP capability information. The system includes a first network entity 300 and a second network entity 400.

The first network entity 300 includes a first transceiving module 301.

The first network entity 300 further includes a module configured to request SDP capability information of the second network entity 400 from the second network entity 400 via the first transceiving module 301. For instance, the module can be the request module 302 as shown in Figure 3.

The first network entity 300 further includes a storage module 303 configured to store the SDP capability information of the second network entity 400.

The second network entity 400 includes a second transceiving module 401.

The second network entity 400 further includes a module configured to return the SDP capability information of itself via the second transceiving module 401 to the first network entity 300 in response to the request of the first network entity 300. For instance, the module may be a response module 402 as shown in Figure 3.

The foregoing first network entity is a media gateway controller and the second network entity is a media gateway. The media gateway controller and the media gateway communicate by way of the H. 248 protocol.

Apparently, various modifications and variations may be made by those skilled in the art without departing from the spirit and scope of the present invention. Accordingly, the present invention is intended to cover these modifications and variations provided that these modification and variation according to the present invention fall within the scope of the claims of the present invention and equivalent thereof.

## Claims

1. A method for obtaining Session Description Protocol (SDP) capability information, **characterized in** comprising:
requesting, by a first network entity, Session Description Protocol capability information of a second network entity from the second network entity;
returning, by the second network entity, the Session Description Protocol capability information of the second network entity itself to the first network entity, in response to the request.

2. The method of claim 1, **characterized in that**, the SDP capability information comprises the supported SDP parameters and the values of the SDP parameters.

3. The method of claim 1, **characterized in that**, the first network entity and the second network entity communicate by way of the H. 248 protocol.

4. The method of claim 3, **characterized in that,**
the request sent from the first network entity to the second network entity is an audit command request carrying the SDP capability information to be requested by the first network entity; and
the second network entity, carries, according to the audit command request, the SDP capability information of the second network entity itself, to be requested by the first network entity, in a command response to the command request and returns the command response to the first network entity.

5. The method of claim 4, **characterized in that**, the command request includes property parameters respectively corresponding to each SDP protocol capability.

6. The method of claim 3, **characterized in that,**
the request sent from the first network entity to the second network entity is an audit command request carrying a symbol representing the request for all the SDP capability information; and
the second network entity, in response to the audit command request, carries all the SDP capability information of the second network entity itself in a command response to the command request and returns the command response to the first network entity.

7. The method of claim 4 or 6, **characterized in that,** the command response includes property parameters respectively corresponding to each SDP capability, and the SDP capability information of the second network entity is set as the values of the corresponding property parameters.

8. The method of claim 7, **characterized in that**, in the command response, the value of the property parameter which is not supported by the second network entity is Null.

9. The method of claim 1, **characterized in that,** the first network entity is a media gateway controller, and the second network entity is a media gateway.

10. A system for obtaining Session Description Protocol capability information, comprising a first network entity and a second network entity, **characterized in that,**
the first network entity comprises a request module, configured to request the SDP capability information of the second network entity from the second network entity; and
the second network entity comprises a response module, configure to return the Session Description Protocol capability information of the second network entity itself to the first network entity, in response to the request of the first network entity.

11. The system of claim 10, **characterized in that,** the first network entity further comprises: a storage module, configured to store the SDP capability information of the second network entity.

12. The system of claim 11, **characterized in that,**
the first network entity further comprises a first transceiving module, configured to send the request; and
the second network entity further comprises a second transceiving module, configured to receive the request and send the information.

13. The system of claim 10, **characterized in that,** the first network entity is a media gateway controller and the second first network entity is a media gateway, wherein the media gateway controller and the media gateway communicate by way of the H. 248 protocol.

14. A network entity, comprising a first transceiving module, **characterized in that**, the network entity further comprises a module, configured to request Session Description Protocol capability information of a communication peer from the ommunication peer via the first transceiving module.

15. The network entity of claim 14, **characterized in** further comprising a storage module configured to store the Session Description Protocol capability information of the peer.

16. The network entity of claim 14 or 15, **characterized in that**, the network entity is a media gateway controller.

17. A network entity, comprising a second transceiving module, **characterized in that,** the network entity further comprises a module configured to send the Session Description Protocol capability information of itself via the second transceiving module.

18. The network entity of claim 17, **characterized in that**, the network entity is a media gateway.
